# EUROPÄISCHE PATENTSCHRIFT

(11) **EP 3 719 341 B1**
(45) Veröffentlichungstag und Bekanntmachung des Hinweises auf die Patenterteilung: **04.05.2022**
(21) Anmeldenummer: 20172430.9
(22) Anmeldetag: 25.07.2013
(51) Int. Cl.: F16F 1/18

(54) **PROFILSTAB UND DARAUS HERGESTELLTE FAHRZEUGFEDER**
SECTIONAL BAR AND VEHICLE SPRING MADE THEREFROM
TIGE DE PROFILÉ ET RESSORT DE VÉHICULE FABRIQUÉ À PARTIR DE CELLE-CI

(30) Priorität: 30.07.2012 AT 8452012
(43) Veröffentlichungstag der Anmeldung: 07.10.2020
(62) Teilanmeldung aus: 13756802.8
(73) Patentinhaber: Hendrickson Commercial Vehicle Systems Europe GmbH, 8750 Judenburg (AT)
(72) Erfinder: ZAMBERGER, Jörg, 8753 Fohnsdorf (AT); KÜHNELT, Gerhard, 8750 Oberweg (AT)
(74) Vertreter: Beer & Partner Patentanwälte KG

(56) Entgegenhaltungen:
- CN-A- 1 032 911
- FR-A1- 2 413 149
- GB-A- 576 388
- GB-A- 2 030 266
- US-A- 108 165
- US-A- 129 297
- US-A- 2 533 511

## Beschreibung

Die Erfindung betrifft ein Verfahren zum Herstellen einer Fahrzeugfeder aus einem Profilstab aus Flachstabstahl, insbesondere Federstahl.

Unter Fahrzeugfeder kann im Einsatzgebiet der Erfindung eine Lenkerfeder, eine Parabelfeder, eine Blattfeder, insbesondere Einblatt- und Mehrblattparabelfeder, welche aus Flachstabstahl hergestellt sind, verstanden werden.

Fahrzeugfedern im Rahmen der Erfindung werden aus Flachstabstahl, vorzugsweise Federstahl, bei Temperaturen von ca. 800 bis 1200 °C warm verformt, insbesondere gewalzt. Bei warm verformten Fahrzeugfedern aus Flachstabstahl erhalten die Fahrzeugfedern ihre federnde Funktion durch das Material, d.h. die Fahrzeugfeder hat eine inhärente federnde Wirkung auf Grund des Ausgangsmaterials. Nach EN 10089,3.1 ist Federstahl folgendermaßen beschrieben: "Werkstoffe, die wegen ihrer Eigenschaften im vergüteten Zustand für die Herstellung von federnden Teilen aller Art besonders geeignet sind. Das Federungsvermögen der Stähle beruht auf ihrer elastischen Verformbarkeit, aufgrund derer sie innerhalb eines bestimmten Bereiches belastet werden können, ohne dass nach der Entlastung eine bleibende Formänderung auftritt...."

Es sind Federsysteme bekannt, bei denen Träger gegossen (z.B. wie in der DE 10 2008 061 190 offenbart) oder geschweißt (z.B. wie in der WO 2003/064192 offenbart) sind; diese Träger sind keine Federn im herkömmlichen Sinn. Solche Träger können - im Gegensatz zu warm verformbaren Stahl - nicht warm verformt sondern nur bei wesentlich höheren Temperaturen verarbeitet werden. Im Unterschied dazu ist z.B. Flachstabstahl aus Federstahl nahezu unschweißbar. Zudem erhalten die gegossenen oder geschweißten Träger durch ihre Materialeigenschaften im Einsatzzustand in einem Federsystem keine primär federnde Wirkung. Auf Grund der Materialeigenschaften bilden diese Träger an sich ein starres System. Die federnde Wirkung dieses Systems wird erst durch die besondere Anbindung des Trägers, meist durch ein im Träger eingearbeitetes Auge bzw. ein Trägerlager aus Gummi, erzielt.

Beim Schmieden mit Schmiedestahl (z.B. wie in der WO2009/014423 offenbart) wird keine Feder durch Walzen eines Profilstabes aus Flachstabstahl hergestellt.

Fahrzeugfedern finden Anwendung in Kraftfahrzeugen, insbesondere in Nutzfahrzeugen oder Anhängern (gezogenes Fahrzeug). Die Anforderungen der Kraftfahrzeugindustrie sind zum einen durch die Reduzierung des Gewichtes einzelner Bauteile geprägt. Zum anderen sind die Anforderungen auf Grund steigenden Motorleistungen dadurch geprägt, dass einzelne Bauteile immer höheren mechanischen Beanspruchungen unterliegen. Problematisch bei warm geformten Fahrzeugfedern aus Flachstabstahl ist dabei, dass das Gewicht der Fahrzeugfeder nicht ohne Weiteres reduziert werden kann, da die Fahrzeugfeder, insbesondere der Federkörper, auf Grund seiner federnden Funktion anderen Belastungen Stand halten muss, als gegossene oder geschweißte Produkte. Bislang wurde Gewicht einer Fahrzeugfeder dadurch eingespart, dass - ausgehend vom gleichen Ausgangsmaterial zum Herstellen der Fahrzeugfeder - die Geometrie der fertigen Fahrzeugfeder zum Erhöhen der Oberflächenspannung derart verändert wurde, dass die Fahrzeugfeder kompakter gebaut werden konnte.

Ein Profilstab mit einem I-Profil zum Herstellen einer Fahrzeugfeder ist aus der US 5, 203, 545 bekannt.

Zudem ist es bekannt, den Federkörper einer Fahrzeugfeder aus einem rechteckigen Profilstab, dessen Ober- und Unterseite parallel zueinander verlaufen und dessen Schmalseiten parallel zueinander verlaufen oder leicht nach außen gewölbt sind, beim Herstellen der Fahrzeugfeder durch Walzen in eine trapezförmige Querschnittsform zu bringen. Federkörper einer Fahrzeugfeder mit einer trapezförmigen Querschnittsform, bei der die im Einbauzustand auf Zug belastete Oberseite breiter ist als die auf Druck belastete Unterseite, sind beispielsweise aus der FR 2 413 149 A1, der CN 1 032 911 A und der US 2,533,511 A bekannt.

Der Erfindung liegt die Aufgabe zu Grunde, eine Fahrzeugfeder der eingangs genannten Gattung zur Verfügung zu stellen, deren Gewicht im Vergleich zu einer herkömmlichen Fahrzeugfeder reduziert ist, wobei die inhärente federnde Funktion des Federkörpers gewährleistet bleibt und die mechanische Belastbarkeit nicht beeinträchtigt wird. Zudem liegt der Erfindung die Aufgabe zu Grunde, das Herstellungsverfahren einer solchen Fahrzeugfeder zu optimieren. In bestimmten Anwendungsfällen kann auch eine kompaktere Bauweise erzielt werden.

Gelöst wird diese Aufgabe mit einem Verfahren zum Herstellen einer Fahrzeugfeder gelöst, welches die Merkmale des Anspruches 1 aufweist.

Erfindungsgemäß ist vorgesehen, dass der Profilstab zum Walzen einer Fahrzeugfeder dient und in beiden Schmalseiten sowie in der Unterseite eine Materialaussparung aufweist, so dass er über seine gesamte Länge eine im Wesentlichen trapezförmige Querschnittsform mit abgerundeten Ecken aufweist.

Somit kann das Gewicht der aus dem Profilstab hergestellten Fahrzeugfeder durch die Geometrie des verwendeten Ausgangsproduktes bis ca. 30 % oder mehr reduziert werden, wobei die Kraftaufnahme und die federnde Wirkung des Federkörpers nicht beeinträchtigt wird. Auch können somit kompaktere Fahrzeugfedern bei gleichbleibendem Gewicht hergestellt werden.

Im Rahmen der Erfindung ist der Profilstab vorzugsweise aus einem Federstahl nach DIN EN 10089 hergestellt.

In einer besonders bevorzugten Ausführungsform verläuft die Materialaussparung über die gesamte Länge des Profilstabes vom oberen Bereich des Profilstabes geradlinig bis zur Unterseite, wobei die Tiefe der Materialaussparung über deren Breite stetig zunimmt. Im Rahmen der Erfindung kann wenigstens eine weitere Materialaussparung in der Unterseite vorgesehen sein.

Insbesondere ist es bevorzugt, wenn die weitere Materialaussparung als Vertiefung in Höhe h des Profilstabes in wenigstens einem mittigen Bereich der Unterseite ausgeprägt ist. Der Profilstab weist eine Längsachse, eine quer zur Längsachse verlaufende Querachse, die vorzugsweise der neutralen Faser entspricht, sowie eine im rechten Winkel zur Querachse von der Unterseite zur Oberseite verlaufende Achse auf, wobei in einer besonders vorteilhaften Ausführungsform eine Materialaussparung im Bereich der Achse verläuft und/oder wobei die Querschnittsform zur Achse symmetrisch ist.

Im Rahmen der Erfindung ist es weiters bevorzugt, wenn der Profilstab hergestellt wird, indem Material in Längsrichtung des Profilstabes verdrängt wird.

Im Rahmen der Erfindung ist vorgesehen, dass der warm verformte Federkörper, der in eingebautem Zustand eine federnde Wirkung hat, die Materialaussparung aufweist.

Da beim Herstellen der Fahrzeugfeder Walzprozesse stattfinden, ist ändert sich die Querschnittsform des Federkörpers über seine Länge. Die Breite der Materialaussparung ändert sich erfindungsgemäß über ihre Länge. Somit kann die Breite der Materialaussparung an die optimale Form der fertigen Feder angepasst werden, wobei ebenfalls Bereiche mit unterschiedlicher Biegefestigkeit erzielt werden können.

Eine Fahrzeugfeder wird aus einem länglichen Profilstab derart hergestellt, dass der Profilstab mit wenigstens einer Materialaussparung gewalzt wird und dass der Federkörper in beiden Schmalseiten sowie in der Unterseite eine Materialaussparung aufweist, so dass er über seine gesamte Länge eine im Wesentlichen trapezförmige Querschnittsform mit abgerundeten Ecken aufweist. Vorzugsweise verläuft die Materialaussparung über die gesamte Länge des Federkörpers vom oberen Bereich des Federkörpers geradlinig bis zur Unterseite und die Tiefe der Materialaussparung nimmt über deren Breite stetig zu.

Erfindungsgemäß ist vorgesehen, dass als Ausgangsmaterial für das Warmverformen ein vorab beschriebener Profilstab verwendet wird, dessen Querschnittsform über dessen gesamten Länge gleich ist, wobei die Breite der Materialaussparung während dem Warmverformen über die Länge des Federkörpers unterschiedlich verändert wird.

Unter Materialaussparung wird im Rahmen der Erfindung eine Materialeinsparung verstanden, d.h. dass sonst im Bereich der Materialaussparung vorhandenes Material durch die Materialaussparung ersetzt ist, bzw. dass sonst vorhandenes Material nicht vorhanden ist. Insbesondere kann im Rahmen der Erfindung unter Materialaussparung verstanden werden, dass im Bereich der Materialaussparung Material in Längsrichtung des Profilstabes verdrängt wird. Im Gegensatz dazu weisen z.B. gerippte Blattfedern keine Materialaussparung auf, da hier das Material nicht in Längsrichtung, sondern in Richtung senkrecht zur Querachse des Profilstabes, "verdrängt" ist. Auch bedeuten z.B. Prägungen in einem Profilstab bzw. in einer Fahrzeugfeder keine Materialaussparung, da bei Prägungen Material nicht über die (vorzugsweise gesamte) Längsrichtung des Profilstabes bzw. des Federkörpers verdrängt ist.

Beispielsweise kann der Herstellungsprozess einer Fahrzeugfeder wie folgt zusammengefasst werden:
Ein Profilstab, insbesondere ein Flachstabstahl, mit einer Materialaussparung mit gleichbleibender Querschnittsform über seine gesamte Länge wird auf die gewünschte Länge geschnitten. Als Ausgangsmaterial wird im Rahmen der Erfindung vorzugsweise ein Flachstabstahl nach EN 10092 oder BS 970-2 und ein Federstahl nach EN 10089 oder EN 10083 verwendet; es können aber auch andere warm verformbare Stähle verwendet werden. Im Rahmen der Erfindung können auch je nach Land/Region genormte Feder oder Vergütungsstähle verwendet werden. Für die weitere Warmformgebung wird der Profilstab auf eine Temperatur von ca. 800 bis 1200 °C gebracht. Der abgelängte Profilstab wird bei dieser Temperatur horizontal oder vertikal gewalzt und die Enden werden je nach gewünschter Fahrzeugfeder entsprechend verarbeitet. Zum Auswalzen wird der Profilstab einseitig erwärmt, zwischen ein geöffnetes Walzenpaar gefahren und dann in Längsrichtung zwischen diesen einmal oder mehrmals hindurch bewegt. Bei diesem Bearbeitungsvorgang kann der Abstand zwischen den Walzen verändert werden, so dass der gewünschte Verlauf des Profilstabes eingestellt wird. Beim Walzen des Profilstabs kann durch Ausüben von unterschiedlichem Druck somit auch die Breite der Materialaussparung über die Länge des Profilstabes unterschiedlich verändert werden. Anschließend wird der Profistab auf der gegenüberliegenden Seite erwärmt und ein erneuter Walzprozess durchgeführt.

Je nach gewünschter Fahrzeugfeder, insbesondere wenn mehrere Federn im Einsatzzustand übereinander angeordnet sein sollen (mehrlagige Federn), kann ein Mittelloch, ein Sackloch oder sonstige Vertiefungen für eine Federschraube oder andere Formschlusselemente eingebracht werden. Der Profilstab kann in einem weiteren Schritt ein oder zwei Augen erhalten. Der erneut erwärmte oder noch auf der erforderlichen Temperatur befindliche gewalzte Profilstab kann dann ggf. eine oder mehrere Pressstationen für eine Endenbearbeitung durchlaufen, wonach ein Rollvorgang durchgeführt werden kann. Das Rollen der Enden zu Augen findet ebenfalls bei Temperaturen von ca. 800 bis 1200 °C statt. In weiteren Schritten kann die Feder (bei ca. 900 °C) gebogen und anschließend vergütet werden.

Je nach Art der Fahrzeugfeder können beide Enden ein Auge aufweisen. Es kann auch ein Ende ein gerolltes oder eingeformtes, z.B. im Federkörper eingebrachtes, Auge aufweisen, wogegen das andere Ende im Wesentlich flach verläuft. In den zuletzt genannten Ausführungsformen kann der Profilstab insbesondere im Bereich zum flach verlaufenden Ende abgewinkelt bzw. abgekröpft sein. In einer anderen Ausführungsform können auch beide Enden im Wesentlichen flach und ggf. leicht abgekröpft (ohne Auge) verlaufen.

Je nach Art der Fahrzeugfeder können die Bearbeitungsschritte abgeändert werden. Im Rahmen der Erfindung kann der Profilstab auch eingangs auf eine bestimmte Bearbeitungstemperatur erwärmt werden, wobei bei den nachfolgenden Bearbeitungsschritten keine weitere Erwärmung notwendig ist.

Bevorzugte und vorteilhafte Ausführungsformen der Erfindung ergeben sich aus der nachstehenden Beschreibung unter Bezugnahme auf die angeschlossenen Zeichnungen, in welchen bevorzugte Ausführungsformen dargestellt sind.

Es zeigt: Fig. 1 bis 5 bekannte Querschnittsformen von Profilstäben für Fahrzeugfedern aus warm verformbaren Stahl, Fig. 6 bis 8 und 10 Ausführungsformen von Profilstäben, die nicht unter den Schutzbereich fallen und Fig. 9 und 11 Ausführungsformen von Profilstäben für ein erfindungsgemäßes Verfahren zum Herstellen einer Fahrzeugfeder im Querschnitt.

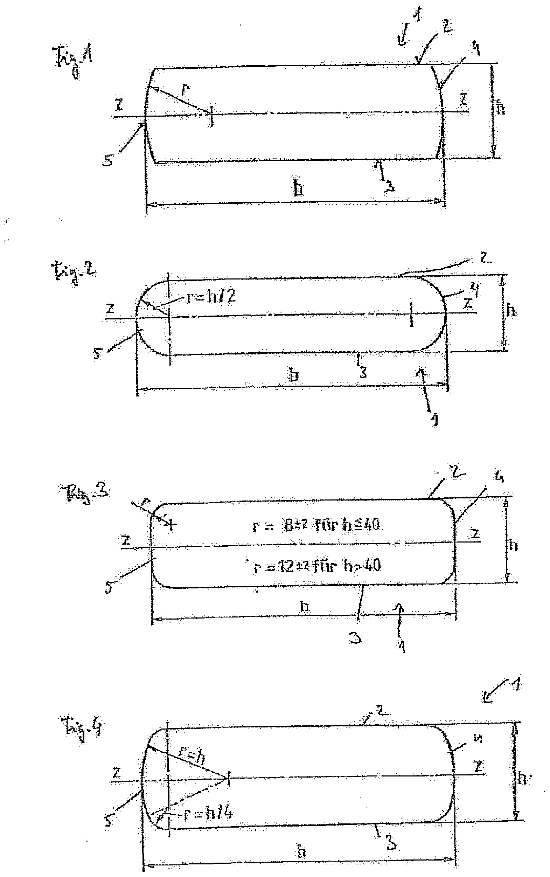

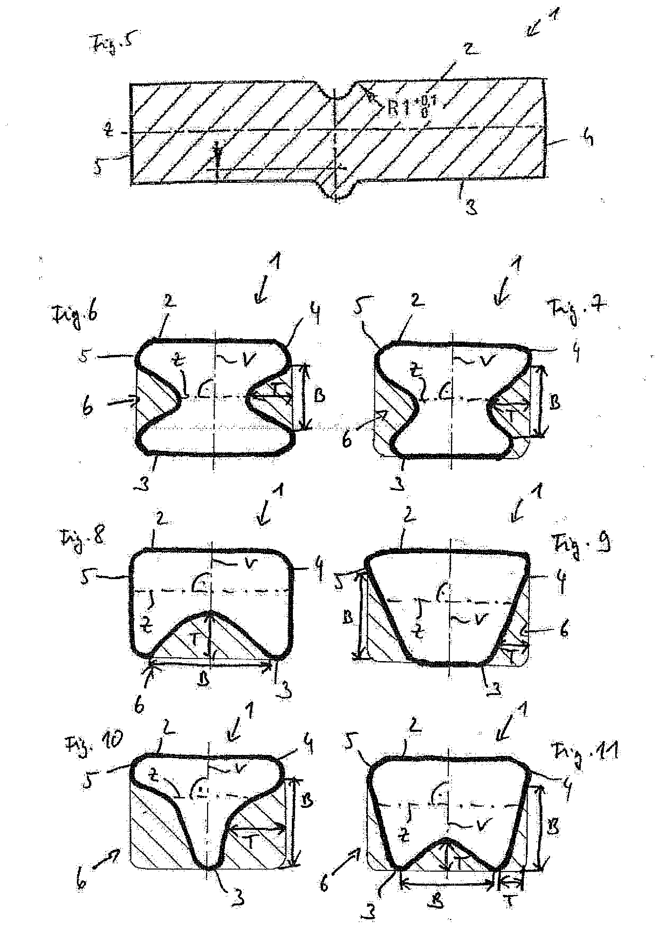

In den Fig. 1 bis 5 sind bislang bekannte Querschnittsformen von Profilstäben 1 aus Flachstabstahl dargestellt, nämlich ein naturkantiges Profil (Fig. 1), ein Profil mit halbkreisförmigen Schmalseiten (Fig. 2), ein Profil mit gerundeten Kanten (Fig. 3) und ein Korbbogen-Profil (British Standard)(Fig. 4). Fig. 5 zeigt im Querschnitt einen warm verformbaren Profilstab 1 für gerippte Blattfedern.

Die in den Fig. 1 bis 3 dargestellten warm verformbaren Profilstäbe 1 entsprechen der DIN EN 10092-1. Fig. 4 zeigt einen warm verformbaren Profilstab 1 aus Flachstabstahl mit einer Querschnittsform nach British Standard BS 970-2:1988 b. Der in Fig. 5 dargestellte warm verformbare Profilstab 1 entspricht der DIN EN 10092-2. Die Profilstäbe 1 weisen eine Oberseite 2, eine Unterseite 3 und zwei Schmalseiten 4, 5 auf. Weiters sind in den Fig. 1 bis 4 die Breite b, die Höhe h und die Querachse z (diese entspricht auch der hinsichtlich der Biegespannung definierten neutralen Faser) der Profilstäbe 1 sowie Krümmungsradien r angedeutet. Die Profilstäbe 1 gemäß den Fig. 1 bis 4 weisen über ihre Länge keine Materialaussparung auf. Auch der in Fig. 5 dargestellte Profilstab 1 weist über seine Länge keine Materialaussparung auf, da im gerippten Bereich sämtliches Material vorhanden ist und das Material auch nicht in Längsrichtung verdrängt ist.

Im Unterschied zu den bekannten Profilstäben 1 weist ein Profilstab 1 für ein erfindungsgemäßes Verfahren wenigstens eine Materialaussparung 6 auf. Somit kann das Gewicht einer warm gewalzten Fahrzeugfeder durch das Ausgangsmaterial reduziert werden, wobei die Kraftaufnahme und die federnde Wirkung der Fahrzeugfeder nicht beeinträchtigt wird.

Beispielhaft ist in Fig. 6 ein Profilstab 1 (insbesondere aus Flachstabstahl) dargestellt, der (ausgehend von einem bekannten Profilstab 1 nach Fig. 3) in seinen beiden Schmalseiten 3, 4 jeweils eine Materialaussparung 6 mit einer Breite B und einer Tiefe T aufweist. Das sonst an den Schmalseiten 4,5 vorhandene Material (wie z.B. in Fig. 3) ist im Profilstab 1 nach Fig. 6 entlang seiner Längsrichtung verdrängt und im Profilstab 1 nicht mehr vorhanden. Gemäß Fig. 6 und in Fig. 7 weist der Profilstab 1 ein I-Profil mit einer im Querschnitt bogenförmig verlaufenden Materialaussparung 6 auf. Die Tiefe T der Materialaussparung 6 nimmt über deren Breite B zuerst kontinuierlich zu and dann wieder kontinuierlich ab.

Unterschied zwischen den in den Fig. 6 und 7 dargestellten Querschnittsformen ist, dass die Unterseite 3 des Profilstabes 1 gemäß Fig. 7 weniger breit ist als dessen Oberseite 2.

Gemäß Fig. 8 weist der Profilstab 1 ein nach unten offenes U-Profil mit einer im Querschnitt bogenförmig verlaufenden Materialaussparung 6 auf, d.h. die Materialaussparung 6 ist in der Unterseite 3 vorgesehen.

In der in Fig. 9 dargestellten, erfindungsgemäßen Ausführungsform weist der Profilstab 1 eine im Wesentlichen trapezförmige Querschnittsform mit abgerundeten Ecken auf. Die Materialaussparung 6 verläuft vom oberen Bereich des Profilstabes 1 geradlinig bis zur Unterseite 3, wobei die Tiefe T der Materialaussparung 6 über deren Breite B stetig zunimmt. Die Materialaussparung 6 ist in beiden Schmalseiten 4, 5 sowie in der Unterseite 3 vorgesehen.

Gemäß Fig. 10 weist der Profilstab 1 ein T-Profil mit einer im Querschnitt wellenförmig verlaufenden Materialaussparung 6 auf. Auch in dieser Ausführungsform nimmt die Tiefe T der Materialaussparung 6 über deren Breite in Richtung zur Unterseite 3 durchgehend zu.

In der in Fig. 11 dargestellten, erfindungsgemäßen Ausführungsform sind in den beiden Schmalseiten 4, 5 Materialaussparungen 6 vorgesehen, die ähnlich wie in Fig. 9 verlaufen. Zudem ist eine weitere Materialaussparung 6 in der Unterseite 3 vorgesehen, die ähnlich wie in Fig. 8 verläuft.

Allen dargestellten Ausführungsformen von Profilstäben 1 für ein erfindungsgemäßes Verfahren zum Herstellen einer Fahrzeugfeder (Fig. 9 und 11) ist gemeinsam, dass der Profilstab 1 eine quer zu seiner Längsachse verlaufende Querachse z (diese kann der neutralen Faser entsprechen) sowie eine im rechten Winkel zur Querachse z verlaufende Achse V aufweist und dass die Querschnittsform zur Achse V symmetrisch ist. Weiters ist allen gezeigten Ausführungsformen gemeinsam, dass sich die Materialaussparung 6, bezogen auf eine durch die Breite b und die Höhe h des Profilstabes 1 gebildete, gedachte Querschnittsfläche, (in den Fig. 9 und 11 schraffiert dargestellt) in den Profilstab 1 hinein erstreckt. Bezogen auf die durch die Breite b und die Höhe h des Profilstabes 1 gebildete, gedachte Querschnittsfläche, lassen sich Randbereiche im Bereich der Ecken (dies können auch abgerundete Ecken sein), sowie mittige Bereiche über die Höhe h und Breite b, definieren. Im Rahmen der Erfindung ist die Materialaussparung 6 eine Vertiefung der Breite b und/oder der Höhe h des Profilstabes 1 in wenigstens einem mittigen Bereich. Insbesondere kann vorgesehen sein, dass wenigstens eine Materialaussparung 6 im Bereich und insbesondere entlang der Querachse z und/oder im Bereich und insbesondere entlang der Achse (V) verläuft.

In den dargestellten Profilstäben 1 erstreckt sich die Materialaussparung 6 über die gesamte Länge des Profilstabes 1, wobei sich die Querschnittsform des Profilstabes 1 über seine gesamte Länge nicht ändert.

Wenn aus dem Profilstab 1 eine Fahrzeugfeder mit einem Federkörper 20 hergestellt wird, können ein oder mehrere Merkmale der im Profilstab 1 beinhalteten Materialaussparung 6 auch im Federkörper 20 vorliegen.

Zusammenfassend kann ein Ausführungsbeispiel der Erfindung wie folgt dargestellt werden:
Ein länglicher Federkörper 20 einer Fahrzeugfeder ist aus einem Profilstab 1 warm verformt hergestellt, insbesondere gewalzt, wobei der Federkörper 20 wenigstens eine Materialaussparung 6 aufweist, wobei sich die Querschnittsform des Federkörpers 20 über seine Länge ändert und wobei sich die Breite B der Materialaussparung 6 über die Länge der Materialaussparung 6 ändert. Der Federkörper 20 weist in beiden Schmalseiten 4, 5 sowie in der Unterseite 3 eine Materialaussparung 6 auf, so dass er eine im Wesentlichen trapezförmige Querschnittsform mit abgerundeten Ecken aufweist, wobei die Materialaussparung 6 über die gesamte Länge des Federkörpers 20 vom oberen Bereich des Federkörpers 20 geradlinig bis zur Unterseite 3 verläuft und wobei die Tiefe T der Materialaussparung 6 über deren Breite B stetig zunimmt.

## Patentansprüche

1. Verfahren zum Herstellen eines Federkörpers (20) einer Fahrzeugfeder aus einem Profilstab aus Flachstabstahl, insbesondere Federstahl, dessen Querschnittsform über seine Länge gleich ist, wobei der Profilstab (1) eine Oberseite (2), eine Unterseite (3) und zwei Schmalseiten (4, 5) aufweist und in beiden Schmalseiten (4, 5) sowie in der Unterseite (3) eine Materialaussparung (6) aufweist, so dass er über die gesamte Länge eine im Wesentlichen trapezförmige Querschnittsform mit abgerundeten Ecken aufweist, wobei der Profilstab (1) als verwendetes Ausgangsprodukt auf die gewünschte Länge geschnitten wird und der abgelängte Profilstab (1) auf eine Temperatur von ca. 800 bis 1200 °C gebracht und bei dieser Temperatur horizontal oder vertikal gewalzt wird, wobei die Breite (B) der Materialaussparung (6) während dem Warmverformen über die Länge des Federkörpers (20) unterschiedlich verändert wird und wobei die Längsenden (7, 9) je nach gewünschter Fahrzeugfeder entsprechend verarbeitet werden.

2. Verfahren nach Anspruch 1, **dadurch gekennzeichnet, dass** ein Profilstab (1) verwendet wird, dessen Materialaussparung (6) über die gesamte Länge des Profilstabes (1) vom oberen Bereich des Profilstabes (1) geradlinig bis zur Unterseite (3) verläuft, wobei die Tiefe (T) der Materialaussparung (6) über deren Breite (B) stetig zunimmt.

3. Verfahren nach Anspruch 1 oder 2, **dadurch gekennzeichnet, dass** ein Profilstab (1) verwendet wird, der wenigstens eine weitere Materialaussparung (6) in der Unterseite (3) aufweist.

4. Verfahren nach Anspruch 3, **dadurch gekennzeichnet, dass** ein Profilstab (1) verwendet wird, dessen weitere Materialaussparung (6) eine Vertiefung der Höhe (h) des Profilstabes (1) in wenigstens einem mittigen Bereich der Unterseite (3) ist, insbesondere dass der Profilstab (1) eine Längsachse, eine quer zur Längsachse verlaufende Querachse (z), die vorzugsweise der neutralen Faser entspricht, sowie eine im rechten Winkel zur Querachse (z) von der Unterseite (3) zur Oberseite (2) verlaufende Achse (V) aufweist und dass wenigstens eine Materialaussparung (6) im Bereich der Achse (V) verläuft.

5. Verfahren nach einem der Ansprüche 1 bis 4, **dadurch gekennzeichnet, dass** ein Profilstab (1) verwendet wird, der eine Längsachse, eine quer zur Längsachse verlaufende Querachse (z), die vorzugsweise der neutralen Faser entspricht, sowie eine im rechten Winkel zur Querachse (z) von der Unterseite (3) zur Oberseite (2) verlaufende Achse (V) aufweist, wobei die Querschnittsform zur Achse (V) symmetrisch ist.

6. Verfahren nach einem der Ansprüche 1 bis 5, **dadurch gekennzeichnet, dass** der Federkörper (20) zwei Längsenden (7, 9) aufweist und dass an wenigstens einem Längsende (7, 9) ein gerolltes Auge (8) oder ein eingeformtes Auge (11) eingebracht wird.

7. Verfahren nach einem der Ansprüche 1 bis 6, **dadurch gekennzeichnet, dass** der Federkörper (20) zwei Längsenden (7, 9) aufweist und dass wenigstens ein Längsende (7, 9) flach verläuft, wobei der Bereich zum flach verlaufenden Ende (7, 9) abgewinkelt bzw. abgekröpft wird.

8. Verfahren nach einem der Ansprüche 1 bis 7, **dadurch gekennzeichnet, dass** in den Federkörper (20) ein Mittelloch, ein Sackloch oder sonstige Vertiefungen für eine Federschraube oder andere Formanschlusselemente eingebracht werden.

9. Verfahren nach einem der Ansprüche 1 bis 8, **dadurch gekennzeichnet, dass** ein Profilstab (1) verwendet wird, dessen Unterseite (3) weniger breit ist als dessen Oberseite (2), so dass ein Federkörper (20) für eine Fahrzeugfeder hergestellt wird, dessen Unterseite (3) weniger breit ist als dessen Oberseite (2).

## Claims

1. Method for producing a spring body (20) of a vehicle spring from a profiled bar made of flat-bar steel, in particular spring steel, the cross-sectional shape of which is the same along the length thereof, wherein the profiled bar (1) has a top side (2), a bottom side (3) and two narrow sides (4, 5), and in the two narrow sides (4, 5) and in the bottom side (3) has a material recess (6) so that it has along the entire length a substantially trapezoidal cross-sectional shape with rounded corners, wherein the profiled bar (1), as the starting product used, is cut to the desired length and the profiled bar (1) that has been cut to length is brought to a temperature of approximately 800 to 1200°C and at this temperature is rolled horizontally or vertically, wherein, during the hot forming, the width (B) of the material recess (6) is changed to varying degrees along the length of the spring body (20), and wherein the longitudinal ends (7, 9) are processed accordingly depending on the desired vehicle spring.

2. Method according to claim 1, **characterized in that** use is made of a profiled bar (1) in which the material recess (6) thereof extends rectilinearly from the top region of the profiled bar (1) to the bottom side (3) along the entire length of the profiled bar (1), the depth (T) of the material recess (6) increasing steadily along the width (B) thereof.

3. Method according to claim 1 or 2, **characterized in that** use is made of a profiled bar (1) that has at least one further material recess (6) in the bottom side (3).

4. Method according to claim 3, **characterized in that** use is made of a profiled bar (1) in which the further material recess (6) thereof is a depression in the height (h) of the profiled bar (1) in at least one central region of the bottom side (3), in particular **in that** the profiled bar (1) has a longitudinal axis, a transverse axis (z) which extends transversely to the longitudinal axis and which preferably corresponds to the neutral fibre, and an axis (V) which extends from the bottom side (3) to the top side (2) at a right angle to the transverse axis (z), and **in that** at least one material recess (6) extends in the region of the axis (V).

5. Method according to any one of claims 1 to 4, **characterized in that** use is made of a profiled bar (1) that has a longitudinal axis, a transverse axis (z) which extends transversely to the longitudinal axis and which preferably corresponds to the neutral fibre, and an axis (V) which extends from the bottom side (3) to the top side (2) at a right angle to the transverse axis (z), wherein the cross-sectional shape is symmetrical with respect to the axis (V) .

6. Method according to any one of claims 1 to 5, **characterized in that** the spring body (20) has two longitudinal ends (7, 9), and **in that** a rolled eye (8) or an integrally formed eye (11) is formed at at least one longitudinal end (7, 9).

7. Method according to any one of claims 1 to 6, **characterized in that** the spring body (20) has two longitudinal ends (7, 9), and **in that** at least one longitudinal end (7, 9) is flat, the region towards the flat end (7, 9) being angled or cranked.

8. Method according to any one of claims 1 to 7, **characterized in that** a central hole, a blind hole or other depressions for a spring screw or other form-fitting connection elements are formed in the spring body (20).

9. Method according to any one of claims 1 to 8, **characterized in that** use is made of a profiled bar (1) in which the bottom side (3) thereof is of smaller width than the top side (2) thereof, so that a spring body (20) for a vehicle spring is produced in which the bottom side (3) thereof is of smaller width than the top side (2) thereof.

## Revendications

1. Procédé de fabrication d'un corps de ressort (20) d'un ressort de véhicule à partir d'une barre profilée en acier plat, en particulier en acier à ressorts, dont la forme en section transversale est identique sur sa longueur, la barre profilée (1) présentant une face supérieure (2), une face inférieure (3) et deux petits côtés (4, 5) et présentant dans les deux petits côtés (4, 5) ainsi que dans la face inférieure (3) un évidement de matériau (6), de sorte qu'elle présente sur toute sa longueur une forme en section transversale sensiblement trapézoïdale avec des coins arrondis, la barre profilée (1) étant coupée à la longueur souhaitée en tant que produit de départ utilisé et la barre profilée (1) mise à longueur étant portée à une température d'environ 800 à 1200 °C et laminée horizontalement ou verticalement à cette température, la largeur (B) de l'évidement de matériau (6) étant modifiée différemment sur la longueur du corps de ressort (20) pendant le formage à chaud et les extrémités longitudinales (7, 9) étant traitées de manière appropriée en fonction du ressort de véhicule souhaité.

2. Procédé selon la revendication 1, **caractérisé en ce qu'**on utilise une barre profilée (1) dont l'évidement de matériau (6) s'étend en ligne droite de la zone supérieure de la barre profilée (1) à la face inférieure (3) sur toute la longueur de la barre profilée (1), la profondeur (T) de l'évidement de matériau (6) augmentant de façon continue sur sa largeur (B).

3. Procédé selon la revendication 1 ou 2, **caractérisé en ce qu'**on utilise une barre profilée (1) qui présente au moins un autre évidement de matériau (6) dans la face inférieure (3).

4. Procédé selon la revendication 3, **caractérisé en ce qu'**on utilise une barre profilée (1) dont l'autre évidement de matériau (6) est un creusement de la hauteur (h) de la barre profilée (1) dans au moins une zone centrale de la face inférieure (3), en particulier que la barre profilée (1) présente un axe longitudinal, un axe transversal (z) s'étendant transversalement à l'axe longitudinal, qui correspond de préférence à la fibre neutre, ainsi qu'un axe (V) s'étendant à angle droit par rapport à l'axe transversal (z) de la face inférieure (3) vers la face supérieure (2), et qu'au moins un évidement de matériau (6) s'étend dans la zone de l'axe (V).

5. Procédé selon l'une des revendications 1 à 4, **caractérisé en ce qu'**on utilise une barre profilée (1) qui présente un axe longitudinal, un axe transversal (z) s'étendant transversalement à l'axe longitudinal, qui correspond de préférence à la fibre neutre, ainsi qu'un axe (V) s'étendant à angle droit par rapport à l'axe transversal (z) de la face inférieure (3) vers la face supérieure (2), la forme en section transversale étant symétrique par rapport à l'axe (V) .

6. Procédé selon l'une des revendications 1 à 5, **caractérisé en ce que** le corps de ressort (20) présente deux extrémités longitudinales (7, 9) et qu'un œillet roulé (8) ou un œillet moulé (11) est réalisé à au moins une extrémité longitudinale (7, 9).

7. Procédé selon l'une des revendications 1 à 6, **caractérisé en ce que** le corps de ressort (20) présente deux extrémités longitudinales (7, 9) et qu'au moins une extrémité longitudinale (7, 9) s'étend à plat, la zone vers l'extrémité s'étendant à plat (7, 9) étant pliée ou coudée.

8. Procédé selon l'une des revendications 1 à 7, **caractérisé en ce qu'**un trou central, un trou borgne ou d'autres creusements pour une vis à ressort ou d'autres éléments de liaison par forme sont réalisés dans le corps de ressort (20).

9. Procédé selon l'une des revendications 1 à 8, **caractérisé en ce qu'**on utilise une barre profilée (1) dont la face inférieure (3) est moins large que sa face supérieure (2), de manière à fabriquer un corps de ressort (20) pour un ressort de véhicule dont la face inférieure (3) est moins large que sa face supérieure (2).
